# EUROPEAN PATENT APPLICATION

(11) **EP 4 645 653 A1**
(43) Date of publication of application: **05.11.2025**
(21) Application number: 22970189.1
(22) Date of filing: 28.12.2022
(51) Int. Cl.: H02K 1/276

(54) **ROTOR OF ROTARY ELECTRICAL MACHINE, AND ROTARY ELECTRICAL MACHINE**

(71) Applicant: Astemo, Ltd., Tokyo 100-0004 (JP)
(72) Inventor: MIYAGI, Takuya, Hitachinaka-shi, Ibaraki 312-8503 (JP); BABA, Yuichiro, Hitachinaka-shi, Ibaraki 312-8503 (JP); NARUSHIMA, Hiroki, Hitachinaka-shi, Ibaraki 312-8503 (JP); YOSHIDA, Shota, Hitachinaka-shi, Ibaraki 312-8503 (JP)
(74) Representative: MERH-IP Matias Erny Reichl Hoffmann Patentanwälte PartG mbB
(86) International application number: PCT/JP2022/048676
(87) International publication number: WO 2024/142403

(57) **Abstract**

A rotor of a rotating electrical machine, the rotor having a plurality of blocks each including a plurality of magnet holes and magnets that are inserted into the magnet holes and form magnetic poles, the plurality of blocks being laminated in an axial direction, wherein the magnet holes hold the magnets inclined with respect to a d-axis of the magnetic poles, the plurality of blocks include, between the magnetic poles, a through hole that has one set of first edges that each extend in a radial direction, a second edge that extends in a circumferential direction at an inner side in the radial direction, and a protruding portion that protrudes toward an outer side in the radial direction from the second edge, and the first edges are formed along edges, on the inner side in the radial direction, of the magnet holes that are adjacent in the circumferential direction.

## Description

### [Technical Field]

The present invention relates to a rotor of a rotating electrical machine, and a rotating electrical machine.

### [Background Art]

Some rotors of rotating electrical machines perform skewing such that a magnetic circuit is oblique with respect to an axial direction, as a measure to counter torque ripples. As a configuration for skewing, there is an arrangement, in which through holes are provided in a rotor core to be used for positioning a circumferential direction. As an example of through holes in such a rotor, PTL 1 discloses a configuration of a motor that has a multi-stage skew configuration, in which through holes are provided as positioning holes.

### [Citation List]

### [Patent Literature]

[PTL 1] WO 2019/073579

### [Summary of Invention]

### [Technical Problem]

In the configuration described in PTL 1, the shapes of the through holes provided as the positioning holes are not optimized for each stage, and accordingly, in a case of rotational speed of the rotor increasing, there is a concern that the greatest principal stress generated in the rotor core under centrifugal force will exceed the material strength of electromagnetic steel sheets serving as core material, and hence, high-speed rotations cannot be handled. The present invention has been made in light of the above-described problem, and an object thereof is to provide a rotor of a rotating electrical machine in which both reduction of torque ripples and stress optimization are realized.

### [Solution to Problem]

A rotor of a rotating electrical machine, the rotor having a plurality of blocks each including a plurality of magnet holes and magnets that are inserted into the magnet holes and form magnetic poles, the plurality of blocks being laminated in an axial direction, wherein the magnet holes hold the magnets inclined with respect to a d-axis of the time customers, the plurality of blocks include, between the magnetic poles, a through hole that has one set of first edges that each extend in a radial direction, a second edge that extends in a circumferential direction at an inner side in the radial direction, and a protruding portion that protrudes toward an outer side in the radial direction from the second edge, and the first edges are formed along edges, on the inner side in the radial direction, of the magnet holes that are adjacent in the circumferential direction.

### [Advantageous Effects of Invention]

According to the present invention, a rotor of a rotating electrical machine can be provided in which both reduction of torque ripples and stress optimization are realized.

### [Brief Description of Drawings]

[Fig. 1]

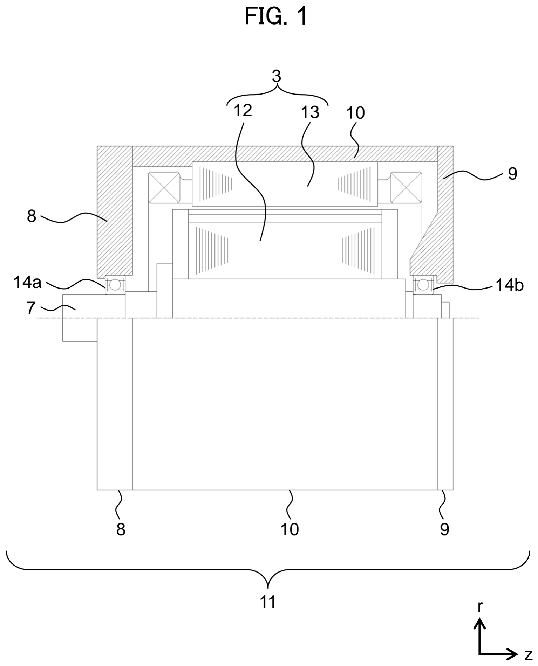

   Fig. 1 is an overall configuration diagram of a rotating electrical machine.
[Fig. 2]

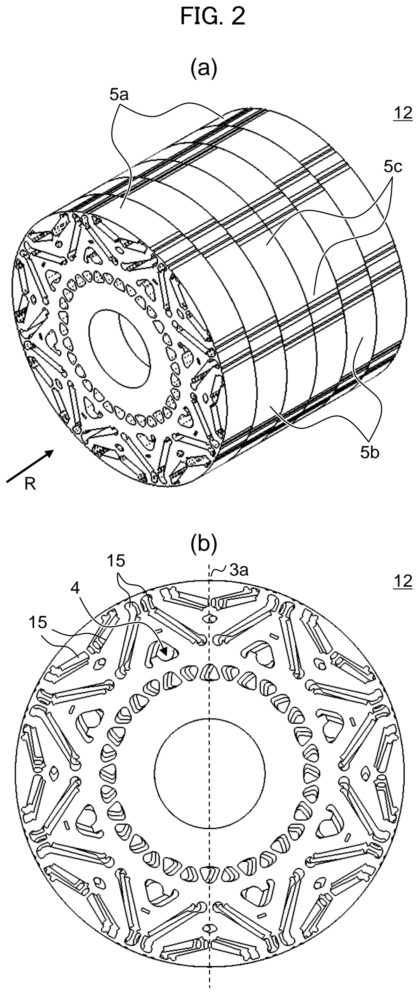

   Fig. 2 is explanatory diagrams of a rotor according to an embodiment of the present invention.
[Fig. 3]

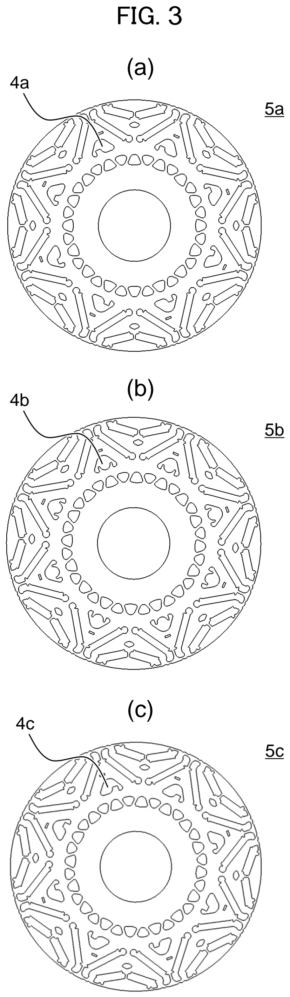

   Fig. 3 is explanatory diagrams of through holes for each block of the rotor according to the embodiment of the present invention.
[Fig. 4]

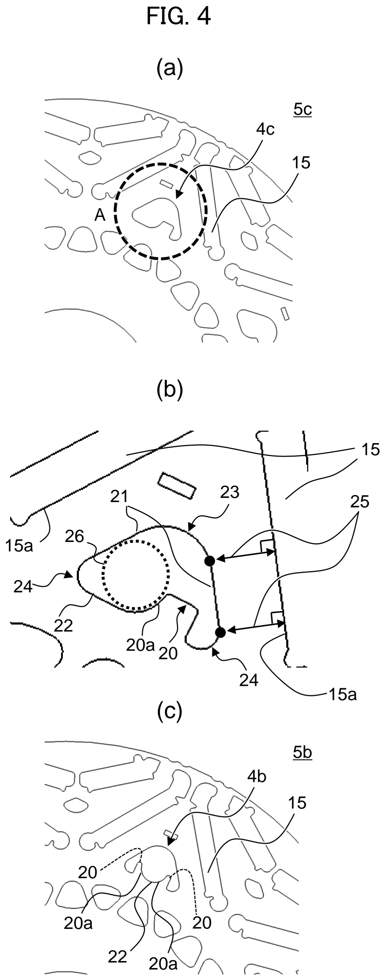

   Fig. 4 is detailed explanatory diagrams of the through holes in Fig. 3.

An embodiment of the preset invention will be described below with reference to the drawings. The following description and drawings are exemplifications for explaining the present invention, with omissions and simplifications being made as appropriate, in order to clarify explanation. The present invention can also be carried out in various other embodiments. The components may be singular or plural, unless specifically limited.

Positions, sizes, shapes, ranges, and so forth, of the components illustrated in the drawings may not represent actual positions, sizes, shapes, ranges, and so forth, in order to facilitate understanding of the invention. Accordingly, the present invention is not necessarily limited to the positions, sizes, shapes, ranges, and so forth, disclosed in the drawings.

### (One Embodiment and Overall Configuration of Present Invention)

### (Fig. 1)

Fig. 1 is a cross-sectional view that illustrates a rotating electrical machine according to the present invention in a simplified manner. Note that an upper side is drawn as a cross-sectional view and a lower side is drawn as a side view, across a shaft 7. Also, an arrow r indicates a rotational direction, and an arrow z indicates an axial direction. Also, the left side in the drawing is a front side.

The rotating electrical machine 3 includes a rotor 12 and a stator 13. The rotating electrical machine 3 is disposed accommodated within a case 11 made up of a front bracket 8, a rear bracket 9, and a housing 10. The case 11 may be an integrated-type case 11 that is made up of the front bracket 8 and the housing 10, or may be an integrated-type case 11 that is made up of the rear bracket 9 and the housing 10.

The stator 13 is fixed at a position in which an outer circumference side thereof faces an inner circumference side of the housing 10. The rotor 12 is disposed so as to face an inner circumference side of the stator 13 across a predetermined clearance. The rotor 12 is fixed to the shaft 7, and integrally rotates with the shaft 7. Both ends of the shaft 7 are rotatably borne by bearings 14a and 14b that are respectively provided to the front bracket 8 and the rear bracket 9.

### (Fig. 2)

Fig. 2(a) is an overall perspective view of the rotor 12, and Fig. 2(b) is a diagram viewing Fig. 2(a) from an R direction. The rotor 12 includes a plurality of magnet holes 15, and magnets (omitted from illustration) that are inserted into the magnet holes 15 and form magnetic poles. In a plurality of blocks 5 that are laminated in the axial direction and that also are made up of steel sheets, the magnets inserted into the magnet holes 15 are each held inclined with respect to a d-axis 3a and thus form the magnetic poles.

The rotor 12 has through holes 4, which are used for positioning the blocks 5 in a circumferential direction in a rotor core, laid out on an outer circumference side of the rotor 12. The through holes 4 are shaped as triangles that have stress reducing effects.

In the rotor 12, a plurality of blocks 5a to 5c are laminated in a skewed manner. Accordingly, suppression of torque ripples can be realized. Detailed description of the through holes 4 that realize skewing of the plurality of blocks 5a to 5c will be given later.

### (Fig. 3)

Fig. 3(a) to Fig. 3(c) are diagrams for describing the through holes 4 formed in each of the blocks 5a to 5c. The through holes 4 include a through hole 4a that is formed in the blocks 5a that are disposed on both end portions in the plurality of blocks 5 that are laminated, a through hole 4c that is formed in the blocks 5c that are disposed in a center portion in the plurality of blocks 5 that are laminated, and a through hole 4b that is formed in the blocks 5b that are disposed between the blocks 5a disposed on both of the end portions and the blocks 5c disposed at the center portion. The skewing of the blocks 5a to 5c that are laminated is realized by being positioned in the circumferential direction by passing a positioning jig or the like through the through holes 4a to 4c formed in this way. Note that the order is first block 5a and first through hole 4a, second block 5c and second through hole 4c, and third block 5b and third through hole 4b, by way of definition, but this is not limiting.

### (Fig. 4)

Fig. 4(a) is an explanatory diagram of the block 5c for explaining the through hole 4 formed on the block 5, Fig. 4(b) is an enlarged diagram of Fig. 4(a), and Fig. 4(c) is an explanatory diagram of the through hole 4b formed in the block 5b. Note that when the explanatory diagram of the shape of the through hole 4c in the block 5c illustrated in Fig. 4(a) is flipped laterally, it becomes an explanatory diagram of the through hole 4a in the block 5a.

The blocks 5a to 5c include the through hole 4 that has a pair of first edges 21 that each extend in a radial direction, a second edge 22 that extends in the circumferential direction at an inner side in the radial direction, and a protruding portion 20 that protrudes to an outer side in the radial direction from the second edge 22, between magnetic poles. The position of the protruding portion 20 in the circumferential direction with respect to the d-axis 3a differs among each of the through holes 4a to 4c.

The rotating electrical machine 3 has the first through hole 4a that is formed in one of the plurality of blocks 5a to 5c, and the second through hole 4b that is formed in another one of the plurality of blocks 5a to 5c. The first through hole 4a and the second through hole 4b have different shapes from each other. The first through hole 4a and the second through hole 4b different from each other with regard to the number of protruding portions 20 formed therein. The second through hole 4b has a plurality of the protruding portions 20, which is advantageous over a case of having just one protruding portion 20, in that skewing can be realized by freely positioning in the circumferential direction, without shifting to one side of the through hole.

The through hole 4 has a first arc 23 that is formed on the outer side on the radial direction, and second arcs 24 that are formed further on the inner side in the radial direction than the first arc 23. The first edges 21 are formed between the first arc 23 and the second arcs 24. The second edge 22 is formed between the two second arcs 24.

The protruding portion 20 in the through hole 4a differs between the each of first through hole 4a and the second through hole 4b, with regard to the position thereof on the second edge 22 in the circumferential direction. Also, the protruding portion 20 is formed at a position close to one second arc 24 out of the two second arcs 24 formed in array in the circumferential direction. Also, unlike the through hole 4a, the protruding portion 20 of the through hole 4c is formed at a position close to the other second arc 24 out of the two second arcs 24, which differs from the one second arc 24 close to the position at which the protruding portion 20 of the through hole 4a is formed. The protruding portions 20 of the through hole 4b in the block 5b are formed at two positions, and the distances of each thereof to the two second arcs 24 are the same. Note that in the through hole 4b, the two protruding portions 20 are formed so as to have the second edge 22 interposed therebetween, as illustrated in Fig. 4(c).

The through hole 4 has a positioning space 26 that is defined by the first edges 21, the second edge 22, and an edge 20a formed by the protruding portion 20. This positioning space 26 is a space through which the aforementioned positioning jig or the like is inserted, and is continuously at the same position from one end face to the other end face of the plurality of blocks 5a to 5c that are laminated. In this way, due to the through holes 4 being provided that have the protruding portion 20 in the through hole 4 that is triangularly formed by the first edges 21 and the second edge 22, and that also have the positioning space 26 continuously formed at the same position, maintaining of core rotational strength due to reduced stress to the material strength or lower, and suppressing of angular deviation at the time of positioning in the rotor core circumferential direction, can both be realized. Also, assembling the rotor core with high precision using this protruding portion 20 enables assembly precision of skewing to be secured, and also enables equivalency of the magnetic circuit at each cross-section that is skewed to be secured.

The first edges 21 of the through holes 4a to 4c are each formed in parallel to edges 15a on the inner side in the radial direction of the magnet holes 15 formed arrayed in the circumferential direction. Also, a distance 25 from the first edges 21 to the edges 15a is the same for the through holes 4a to 4c. Thus, flux paths are the same due to the relative positions of the through holes 4 being the same with respect to the edges 15a in each of the blocks 5, and also torque ripples can be effectively reduced thereby.

According to the embodiment of the present invention described above, the following advantages can be obtained.
(1) A rotor of a rotating electrical machine, in which rotor a plurality of blocks, including each of a plurality of magnet holes 15 and magnets that are inserted into the magnet holes 15 and form magnetic poles, are laminated in an axial direction, in which the magnet holes 15 hold the magnets inclined with respect to a d-axis 3a of the magnetic poles, the plurality of blocks 5 include, between the magnetic poles, a through hole 4 that has one set of first edges 21 that each extend in a radial direction, a second edge 22 that extends in a circumferential direction at an inner side in the radial direction, and a protruding portion 20 that protrudes toward an outer side in the radial direction from the second edge 22. The first edges 21 are formed along edges 15a edges, on the inner side in the radial direction, of the magnet holes 15 that are adjacent in the circumferential direction. Thus, a rotor 12 of a rotating electrical machine can be provided in which torque ripples are reduced, increased speed of rotation can be handled, and both reduced stress and improved manufacturability (improved assemblability) are realized.
(2) The protruding portion 20 has a first through hole 4a that is formed in one block of the plurality of blocks 5a to 5c, and a second through hole 4b that is formed in another block of the plurality of blocks. The first through hole 4a and the second through hole 4b have different shapes from each other. According to this arrangement, skewing is realized.
(3) The protruding portion 20 has a first through hole 4a that is formed in one block of the plurality of blocks, and a second through hole 4b that is formed in another block of the plurality of blocks. A position in the circumferential direction of the protruding portion 20 on the second edge 22 is different between each of the first through hole 4a and the second through hole 4b. According to this arrangement, skewing is realized.
(4) The protruding portion 20 has a first through hole 4a that is formed in one block of the plurality of blocks, and a second through hole 4b that is formed in another block of the plurality of blocks. A count of the protruding portion 20 formed is different between each of the first through hole 4a and the second through hole 4b. According to this arrangement, skewing can be realized.
(5) The through hole 4 has a positioning space 26 that is defined by the first edges 21, the second edge 22, and an edge of the protruding portion 20, and the positioning space 26 in each of the plurality of blocks 5a to 5c that are laminated is continuously at a same position from one end face in the axial direction to another end face. According to this arrangement, the blocks 5a to 5c that are positioned in the circumferential direction by a positioning jig or the like and are also laminated are skewed, and both reduction of torque ripples and improved manufacturability can be realized.
(6) The protruding portion 20 has a first through hole 4a that is formed in one block of the plurality of blocks, and a second through hole 4b that is formed in another block of the plurality of blocks. A distance 25 from the first edges 21 to the edges 15a is the same between the first through hole 4a and the second through hole 4b. According to this arrangement, relative positions of the through holes 4 with respect to the edges 15a are the same, and accordingly torque ripples can be effectively reduced by making magnetic paths of each of the blocks 5a to 5c that are skewed to be the same.
(7) The protruding portion 20 has a first through hole 4a that is formed in a predetermined block of the plurality of blocks, and a second through hole 4b that is formed in another block of the plurality of blocks. The first edges 21 of each of the first through hole 4a and the second through hole 4b are parallel to the edges 15a of the magnet holes 15 on the inner side in the radial direction. According to this arrangement, the relative positions of the through holes 4 with respect to the edges 15a are the same, and accordingly torque ripples can be effectively reduced by making the magnetic paths of each of the blocks 5a to 5c that are skewed to be the same.
(8) The through hole 4 includes a through hole 4a that is formed in a block 5a that is disposed on both end portions of the plurality of blocks 5 that are laminated, a through hole 4c that is formed in a block 5c that is disposed at a center portion of the plurality of blocks 5 that are laminated, and a through hole 4b that is formed in a block 5b that is disposed between the block 5a disposed at both of the end portions and the block 5c disposed at the center portion thereof. The plurality of blocks 5a to 5c are skewed by being positioned in the circumferential direction by the through holes 4a to 4c. According to this arrangement, assembly precision of skewing can be secured.
(9) A position of the protruding portion 20 with respect to a d-axis 3a in the circumferential direction differs among each of the through hole 4a, the through hole 4c, and the through hole 4b. According to this arrangement, the blocks 5a to 5c that are laminated are skewed, and both reduced stress and reduction of torque ripples can be realized.
(10) A rotating electrical machine 3 includes the rotor 12 that has features according to the present invention, and a stator 13 that faces the rotor 12 across a predetermined clearance. According to this arrangement, a rotating electrical machine 3 can be provided in which torque ripples are reduced, and also both reduced stress and improved manufacturability can be realized.

Note that the present invention is not limited to the above embodiment, and that various modifications and other combinations can be made without departing from the spirit and scope thereof. Also, the present invention is not limited to an arrangement including all configurations described in the above embodiment, and includes arrangements from which part of the configuration is omitted.

### [Reference Signs List]

- 3: Rotating electrical machine
- 3a: d axis
- 4: Through hole for positioning
- 5: Block
- 7: Shaft
- 8: Front bracket
- 9: Rear bracket
- 10: Housing
- 11: Case
- 12: Rotor
- 13: Stator
- 14a, 14b: Bearing
- 15: Magnet hole
- 15a: Edge on inner side in radial direction
- 20: Protruding portion
- 20a: Edge of protruding portion
- 21: First edge
- 22: Second edge
- 23: First arc
- 24: Second arc
- 25: Distance between first edge and edge of magnet hole on inner circumferential side
- 26: Positioning space

## Claims

1. A rotor of a rotating electrical machine, the rotor having a plurality of blocks each including a plurality of magnet holes and magnets that are inserted into the magnet holes and form magnetic poles, the plurality of blocks being laminated in an axial direction, wherein
the magnet holes hold the magnets inclined with respect to a d-axis of the magnetic poles,
the plurality of blocks include, between the magnetic poles, a through hole that has one set of first edges that each extend in a radial direction, a second edge that extends in a circumferential direction at an inner side in the radial direction, and a protruding portion that protrudes toward an outer side in the radial direction from the second edge, and
the first edges are formed along edges, on the inner side in the radial direction, of the magnet holes that are adjacent in the circumferential direction.

2. The rotor of a rotating electrical machine according to claim 1, wherein
the protruding portion has
a first through hole that is formed in any block of the plurality of blocks, and
a second through hole that is formed in another block of the plurality of blocks, and
the first through hole and the second through hole have different shapes from each other.

3. The rotor of a rotating electrical machine according to claim 1, wherein
the protruding portion has
a first through hole that is formed in any block of the plurality of blocks, and
a second through hole that is formed in another block of the plurality of blocks, and
a position, in the circumferential direction, of the protruding portion on the second edge is different between each of the first through hole and the second through hole.

4. The rotor of a rotating electrical machine according to claim 1, wherein
the protruding portion has
a first through hole that is formed in any block of the plurality of blocks, and
a second through hole that is formed in another block of the plurality of blocks, and
a number of the protruding portion formed is different between each of the first through hole and the second through hole.

5. The rotor of a rotating electrical machine according to claim 1, wherein
the through hole has a positioning space that is defined by the first edges, the second edge, and an edge of the protruding portion, and
the positioning space in each of the plurality of blocks that are laminated is continuously at a same position from one end face to another end face in the axial direction.

6. The rotor of a rotating electrical machine according to claim 1, wherein
the protruding portion has
a first through hole that is formed in any block of the plurality of blocks, and
a second through hole that is formed in another block of the plurality of blocks, and
a distance from the first edges to the edges on the inner side in the radial direction is the same with regard to the first through hole and the second through hole.

7. The rotor of a rotating electrical machine according to claim 1, wherein
the protruding portion has
a first through hole that is formed in a predetermined block of the plurality of blocks, and
a second through hole that is formed in another block of the plurality of blocks, and
the first edges of each of the first through hole and the second through hole are formed so as to be parallel to the edges of the magnet holes on the inner side in the radial direction.

8. The rotor of a rotating electrical machine according to claim 1, wherein
the through hole includes a first through hole that is formed in a first block that is disposed on both end portions of the plurality of blocks that are laminated, a second through hole that is formed in a second block that is disposed at a center portion of the plurality of blocks that are laminated, and a third through hole that is formed in a third block that is disposed between the first block disposed at both of the end portions and the second block disposed at the center portion, and
the plurality of blocks are skewed by being positioned in the circumferential direction by the first through hole, the second through hole, and the third through hole.

9. The rotor of a rotating electrical machine according to claim 1, wherein
a position of the protruding portion with respect to a d-axis in the circumferential direction differs among each of the first through hole, the second through hole, and the third through hole.

10. A rotating electrical machine, comprising:
the rotor according to any one of claims 1 to 6; and
a stator that faces the rotor across a predetermined clearance.
